# EUROPÄISCHE PATENTSCHRIFT

(11) **EP 2 658 936 B1**
(45) Veröffentlichungstag und Bekanntmachung des Hinweises auf die Patenterteilung: **05.06.2019**
(21) Anmeldenummer: 12703253.0
(22) Anmeldetag: 17.01.2012
(51) Int. Cl.: C09J 5/00, B05C 17/005, B05B 11/00, B05C 17/10, B29C 65/52, C09J 171/00, C09J 183/04, F16B 11/00

(54) **BEFESTIGUNGSMITTEL**
FASTENING MEANS
MOYEN DE FIXATION

(30) Priorität: 24.02.2011 DE 102011012351
(43) Veröffentlichungstag der Anmeldung: 06.11.2013
(73) Patentinhaber: Aufrecht GmbH, 71563 Affalterbach (DE)
(72) Erfinder: ORTWEIN, Angelika, 73061 Ebersbach (DE)
(74) Vertreter: Ruckh, Rainer Gerhard
(86) Internationale Anmeldenummer: PCT/EP2012/050592
(87) Internationale Veröffentlichungsnummer: WO 2012/113589

(56) Entgegenhaltungen:
- WO-A1-2007/085622
- WO-A1-2009/156013

## Beschreibung

Die Erfindung betrifft ein Befestigungsmittel und ein Verfahren zur Fixierung eines Gegenstands auf einer Unterlage.

Aus der WO 2009/156013 A1 ist ein Befestigungsmittel bekannt, das aus einem aeroben Klebstoff und einem hydrophilen Stoff besteht.

Bei diesem Befestigungsmittel entsteht durch die Zugabe des hydrophilen Stoffes zum aeroben Klebstoff eine Mischung, die nicht mehr in Oberflächenkontakt mit feuchter Umgebungsluft gebracht werden muss, um dann von dieser Oberfläche her auszuhärten. Vielmehr sorgt der in der Mischung vorhandene, den aeroben Klebstoff durchsetzende hydrophile Stoff dafür, dass der in der Mischung enthaltene aerobe Klebstoff von innen her auch dann aushärten kann, wenn kein äußerer Kontakt mehr zu der Feuchtigkeit enthaltenden Umgebungsluft mehr gegeben ist.

Um den geeigneten Feuchtigkeitsgehalt in dem erfindungsgemäßen Befestigungsmittel zu erhalten, wird der Mischung aus aerobem Klebstoff und hydrophilem Stoff dosiert Feuchtigkeit zugeführt. Dabei erfolgt eine dosierte Zugabe von Feuchtigkeit zum hydrophilen Stoff bevor dieser mit dem aeroben Klebstoff gemischt wird.

Für eine dosierte Flüssigkeitszufuhr wird zur Mischung der Komponenten insbesondere ein Spatel aus Holz verwendet, der zuvor in Wasser oder allgemein in eine Flüssigkeitsmenge getaucht wird. Die Wassermenge oder allgemein Flüssigkeitsmenge, die der Spatel aufnehmen kann, bildet eine dosierte Feuchtigkeitsmenge, die der Mischung von aerobem Klebstoff und hydrophilem Stoff zugeführt wird. Dabei kann der hydrophile Stoff als Feuchtigkeitspuffer wirken, der überschüssige Feuchtigkeit oder allgemein Fluchtstoffe aufnehmen und bei Bedarf wieder abgeben kann. Durch den Mischvorgang gelangt die Feuchtigkeit in das gesamte Volumen der Mischung, wodurch diese vollständig aushärten kann.

Die WO 2007/085622 A1 betrifft feuchtigkeitshärtende Zusammensetzungen, welche mindestens ein silanfunktionelles Polymer mit mindestens zwei Endgruppen und mindestens ein Reaktionsprodukt, welches aus mindestens einem Aminosilan mit mindestens einer primären Aminogruppe und mindestens einem Silangruppen-freien Alken, welches befähigt ist, mit primären Aminogruppen 1,4-Additionsreaktionen einzugehen, hergestellt wird, umfasst. Die Zusammensetzungen weisen verbesserte Haftungseigenschaften auf und sind insbesondere für eine Anwendung als Klebstoffe, Dichtstoffe oder Beschichtungen, insbesondere als elastischer Kleb- oder Dichtstoff, geeignet.

Der Erfindung liegt die Aufgabe zugrunde, ein Befestigungsmittel der eingangs genannten Art bereitzustellen, welches einfach handhabbar ist.

Zur Lösung dieser Aufgabe sind die Merkmale der Ansprüche 1 und 12 vorgesehen. Vorteilhafte Ausführungsformen und zweckmäßige Weiterbildungen der Erfindung sind in den Unteransprüchen beschrieben.

Das erfindungsgemäße Befestigungsmittel dient zur Fixierung eines Gegenstands auf einer Unterlage. Das Befestigungsmittel besteht aus einem aeroben Klebstoff und einem fließfähigen Stoff. Der aerobe Klebstoff ist in einer ersten Aufnahme mit einem zugeordneten ersten Entnahmemittel gelagert, wobei das erste Entnahmemittel ein Zahnspachtel ist. Der fließfähige Stoff ist in einer zweiten, von der ersten Aufnahme getrennten Aufnahme mit einem zugeordneten zweiten Entnahmemittel gelagert. Das erste Entnahmemittel ist so ausgebildet, dass mit diesem auf der Unterlage eine höhenprofilierte Schicht von aerobem Klebstoff generiert wird. Das zweite Entnahmemittel ist so ausgebildet, dass auf der höhenprofilierten Schicht von aerobem Klebstoff eine vom fließfähigen Stoff gebildete Oberflächenschicht gebildet wird. Durch Aufpressen des Gegenstands werden auf die so gebildete Schichtstruktur Volumeneinlagerungen des fließfähigen Stoffs in dem aeroben Klebstoff gebildet.

Ein wesentlicher Vorteil des erfindungsgemäßen Befestigungsmittels beziehungsweise des erfindungsgemäßen Verfahrens besteht darin, dass zur Herstellung des Befestigungsmittels das Mischen des aeroben Klebstoffs mit dem fließfähigen Stoff vollständig entfallen kann, wodurch die Handhabung des Befestigungsmittels zur Herstellung einer Verbindung zwischen einem Gegenstand und einer Unterlage erheblich vereinfacht wird.

Der Mischvorgang des fließfähigen Stoffs mit dem aeroben Klebstoff zur Ausbildung des Befestigungsmittels zur Verbindung des Gegenstands mit der Unterlage erfolgt vielmehr selbsttätig beim Anpressen des Gegenstands auf die Unterlage. Voraussetzung hierfür ist, dass der aerobe Klebstoff aus der ersten Aufnahme mittels des ersten Entnahmemittels in Form einer höhenprofilierten Schicht aufgetragen wird, die sich von einer ebenen Schicht durch eine Ausbildung von durch Tälern getrennten Höhenstrukturen unterscheidet. Die Höhenunterschiede können dabei in ihrem Absolutbetrag in einem weiten Bereich variieren und homogen oder inhomogen ausgebildet und verteilt sein.

Die dann auf die höhenprofilierte Schicht des aeroben Klebstoffs aufgebrachte Oberflächenschicht des fließfähigen Stoffs kann entweder homogen oder inhomogen ausgebildet sein. Dabei kann sich die Oberflächenschicht des fließfähigen Stoffs vorteilhaft über die gesamte Oberfläche der höhenprofilierten Schicht des aeroben Klebstoffs erstrecken, wobei dies jedoch nicht zwingend ist.

Wird dann der Gegenstand auf die so gebildete Schichtstruktur, bestehend aus der höhenprofilierten Schicht des aeroben Klebstoffs und der Oberflächenschicht des fließfähigen Stoffs aufgesetzt, um den Gegenstand auf der Unterlage zu fixieren, so werden die Spitzen der höhenprofilierten Schicht durch den Anpressdruck des Gegenstands in Richtung der Täler dieser Schicht umgelegt, wodurch der fließfähige Stoff in dem Volumen des aeroben Klebstoffs eingelagert, das heißt mit diesem durchmischt wird, ohne dass hierfür ein separater Arbeitsvorgang nötig ist.

Durch die Durchsetzung des aeroben Klebstoffs mit dem fließfähigen Stoff kann damit das Befestigungsmittel schnell in seinem gesamten Volumen aushärten, ohne dass hierzu ein Kontakt mit der Außenatmosphäre oder eine externe Flüssigkeitszufuhr notwendig wäre. Insbesondere kann das erfindungsgemäße Befestigungsmittel zwischen zwei diffusionsdichten Flächen eingesetzt werden, um diese zu verbinden.

In einer besonders vorteilhaften Ausgestaltung der Erfindung ist der aerobe Klebstoff von silanen MS-Polymeren gebildet.

Der aerobe Klebstoff ist in einer Aufnahme wie zum Beispiel einer Tube oder einer Kartusche gelagert.

Die erste Aufnahme und das zugeordnete erste Entnahmemittel können prinzipiell getrennte Einheiten oder besonders vorteilhaft eine Baueinheit bilden, das heißt das Entnahmemittel ist direkt an der Aufnahme montiert.

Erfindungsgemäß ist das erste Entnahmemittel in Form eines Zahnspachtels ausgebildet. Der aerobe Klebstoff wird aus der ersten Aufnahme über den Zahnspachtel auf die Unterlage aufgebracht. Entsprechend der Zahnungsstruktur des Zahnspachtels entsteht dabei eine Höhenprofilierung der aus dem aeroben Klebstoff bestehenden Schicht.

Der fließfähige Stoff kann vorteilhaft aus einer Mischung von einem hydrophilen Stoff und einem flüssigkeitshaltigen Träger gebildet sein. Anstelle eines hydrophile Stoffs kann auch ein hygroskopischer Stoff eingesetzt werden. Der hydrophile Stoff kann dabei ein Feststoff sein. Durch die Mischung mit dem flüssigkeitshaltigen Träger entsteht ein pastöser fließfähiger Stoff. Als Flüssigkeit eignet sich insbesondere Wasser. Durch den so erzielten Feuchtigkeitsgehalt des fließfähigen Stoffs und damit auch der Mischung aus fließfähigem Stoff und aerobem Klebstoff wird ein Aushärten des so gebildeten Befestigungsmittels gewährleistet.

Die hydrophilen Stoffe können in diesem Fall von Salzen gebildet sein. Weiterhin können die hydrophilen Stoffe von hydrophilen Trägerfasern gebildet sein, die von Naturfasern oder Chemiefasern gebildet sein können und welche bevorzugt aus Baumwolle bestehen. Prinzipiell eignen sich als hydrophile Stoffe Kreide, Mehl, Blähton, Galaktose, Watte, Flachs, Hanf, Viskose, Zellulose, Seegras, Filz oder auch Holzfasern, Luftporenfilter oder allgemein atmungsaktive Stoffe.

Gemäß einer besonders vorteilhaften Ausführungsform der Erfindung ist der fließfähige Stoff in Form einer Flüssigkeit ausgebildet. Besonders vorteilhaft besteht die Flüssigkeit aus einem hydrophilen Stoff wie zum Beispiel Polyethylen-Glykol. Weiterhin eignen sich als hydrophile oder gegebenenfalls hygroskopische Flüssigkeiten Polypropylen-Glykol, eine Sauerstofflösung ein Alkohol, insbesondere Isopropanol als Gemisch mit Wasser. Generell dient die hydrophile Flüssigkeit oder allgemein der hydrophile Stoff zur Reaktion mit dem aeroben Klebstoff durch Austausch von Feuchtigkeit, Sauerstoff, Wasserstoff, Kohlenstoff und weiteren Reaktionsstoffen. Prinzipiell kann die Flüssigkeit auch von Wasser gebildet sein.

Die Ausbildung des fließfähigen Stoffs in Form einer Flüssigkeit ermöglicht eine besonders einfache Handhabung bei der Herstellung des Befestigungsmittels.

Die Flüssigkeit wird in einer zweiten Aufnahme in Form eines Behälters, insbesondere einer Tube oder einer Kartusche gelagert. Auf diesen Behälter ist als zweites Entnahmemittel ein Sprühkopf aufgebracht. Durch Betätigen des Sprühkopfs kann einfach und schnell auf die höhenprofilierte Schicht des aeroben Klebstoffs eine vorzugsweise flächendeckende, nahezu homogene Schicht der Flüssigkeit aufgetragen werden. Allein durch Aufsetzen des Gegenstands auf die so ausgebildete Schichtstruktur vermengt sich die Flüssigkeit im Volumen des aeroben Klebstoffs und bildet so das Befestigungsmittel, das auch unter Abschluss gegen die Atmosphäre durch den im Volumen eingelagerten Flüssigkeitsanteil schnell und vollständig aushärtet.

Die Aufnahmen mit den zugeordneten Entnahmemitteln bilden ein Montageset zur Herstellung des erfindungsgemäßen Befestigungsmittels. Die Komponenten des Montagesets können alle getrennten Einheiten bilden oder teilweise zu Baueinheiten zusammengefasst sein. Insbesondere können alle Komponenten des Montagesets zu einer Baueinheit zusammengefasst werden.

In jedem Fall kann das Montagset nicht nur einmal sondern mehrfach verwendet werden. Dies beruht darauf, dass der aerobe Klebstoff einerseits und der fließfähige Stoff andererseits nicht nur in separaten Aufnahmen gelagert werden, sondern auch separate Entnahmemittel zur Entnahme des aeroben Klebstoffs und des fließfähigen Stoffs vorgesehen sind. Damit wird ein Mischrohr oder allgemein eine Komponente des Montagesets, in welchem der fließfähige Stoff und der aerobe Klebstoff vor Auftrag auf die Unterlage gemischt werden, vermieden. Dies bedeutet, dass das Montageset keine Komponente aufweist, wo der aerobe Klebstoff mit dem fließfähigen Stoff in Berührung kommt und mit diesem zum Befestigungsmittel aushärtet, wodurch diese Komponente natürlich nicht mehr wiederverwendbar wäre.

Die Erfindung wird im Folgenden anhand der Zeichnungen erläutert. Es zeigen:
- Figur 1:: Ausführungsbeispiel eines erfindungsgemäßen Montagesets.
- Figur 2:: Teildarstellung dieses Zahnspachtels des Montagesets gemäß Figur 1.
- Figur 3:: Darstellung einer mit dem Montageset erzeugten höhenprofilierten Schicht aus aerobem Klebstoff auf einer Unterlage.
- Figur 4:: Darstellung der höhenprofilierten Schicht gemäß Figur 3 mit einer darauf aufgetragenen Oberflächenschicht aus fließfähigem Stoff.
- Figur 5:: Darstellung der Verformung der Schichtstruktur gemäß Figur 4 bei Aufsetzen eines Gegenstands.
- Figur 6:: Darstellung des mit dem aus der Schichtstruktur gemäß Figur 4 ausgebildeten Befestigungsmittel an der Unterlage befestigten Gegenstandes.

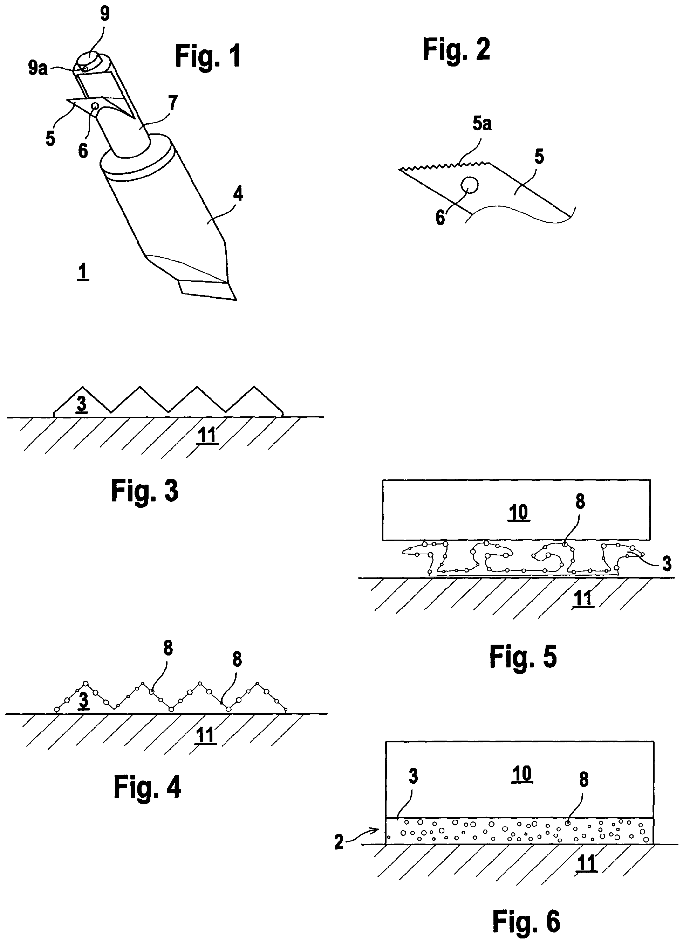

Figur 1 zeigt ein Ausführungsbeispiel eines Montagesets 1 zur Herstellung eines Befestigungsmittels 2, bestehend aus einer Mischung aus einem aeroben Klebstoff 3 und einem fließfähigen Stoff, wobei die einzelnen Schritte zur Erzeugung des Befestigungsmittels 2 aus dem aeroben Klebstoff 3 und dem fließfähigen Stoff in den Figuren 3 bis 6 dargestellt sind.

Das Montageset 1 umfasst eine erste Aufnahme in Form einer Tube 4, in welcher der aerobe Klebstoff 3 als Einzelkomponente gelagert ist. Der aerobe Klebstoff 3 besteht im vorliegenden Fall aus silanen MS-Polymeren. Die Tube 4 weist ein Kopfteil auf, an welches als Entnahmemittel für den aeroben Klebstoff 3 ein Zahnspachtel 5 angebracht ist. Der Zahnspachtel 5 ist in einer Detaildarstellung in Figur 2 dargestellt. Weiter aus dieser Darstellung ersichtlich weist die Vorderkante des Zahnspachtels 5 eine Zahnung 5a auf. Im Bereich des Zahnspachtels 5 befindet sich eine Entnahmeöffnung 6, aus welcher der aerobe Klebstoff 3 aus der Tube 4 gefördert wird und auf dem Zahnspachtel 5 aufgebracht wird. Alternativ kann anstelle eines Zahnspachtels 5 auch ein Profilierspachtel oder dergleichen eingesetzt werden.

Im Bereich des Kopfs der Tube 4 ist, fest mit dieser verbunden, als zweite Aufnahme ein Behälter 7 vorgesehen. In dem Behälter 7 ist der fließfähige Stoff gelagert, der im vorliegenden Fall von einer hydrophilen Flüssigkeit 8 gebildet ist. Als hydrophile Flüssigkeit 8 wird bevorzugt ein IsopropylAlkohol-Wasser Gemisch eingesetzt. Auf der Oberseite des Behälters 7 befindet sich ein Sprühkopf 9 mit einer Austrittsöffnung 9a, über welche die hydrophile Flüssigkeit 8 aus dem Behälter 7 ausgeführt werden kann. Der Sprühkopf 9 ist dabei in Form eines Knopfes ausgebildet. Durch Aufdrücken auf diesen Knopf wird der Sprühkopf 9 betätigt, so dass hydrophile Flüssigkeit 8 aus der Austrittsöffnung 9a ausgesprüht wird.

Das Montageset 1 gemäß Figur 1 bildet eine Baueinheit die mit einer Hand von einer Person betätigt werden und damit ein einfaches Handling ermöglicht. Weiterhin ist vorteilhaft, dass die hydrophile Flüssigkeit 8 zum Reinigen von Oberflächen verwendet werden kann. Mit dem aeroben Klebstoff 3 und der hydrophilen Flüssigkeit 8 wird ein Befestigungsmittel 2 ausgebildet, das zur Befestigung eines Gegenstands, im vorliegenden Fall eines Fügeteils 10 auf einer Unterlage 11 dient. Die hierzu erforderlichen Verfahrensschritte sind in den Figuren 3 bis 6 dargestellt.

Zunächst wird mit dem Zahnspachtel 5 aerober Klebstoff 3 auf die Unterlage 11 aufgetragen (Figur 3). Prinzipiell kann die Unterlage 11 zuvor mit der hydrophilen Flüssigkeit gereinigt werden. Da der Zahnspachtel 5 eine Zahnung 5a aufweist, wird mit dieser eine höhenprofilierte Schicht von aerobem Klebstoff 3 auf der Unterlage 11 erzeugt, wobei diese Schicht eine Zackenstruktur mit einer Folge von Spitzen und Tälern bildet. Je nach Ausbildung der Zahnung 5a des Zahnspachtels 5 kann die Schicht des aeroben Klebstoffs 3 auch eine andersartige Höhenprofilierung aufweisen.

In einem zweiten Schritt wird auf die höhenprofilierte Schicht des aeroben Klebstoffs 3 eine Oberflächenschicht von hydrophiler Flüssigkeit 8 aufgetragen, wie in Figur 4 schematisch dargestellt ist. Die Aufbringung der Oberflächenschicht erfolgt durch Aufsprühen der hydrophilen Flüssigkeit 8 aus dem Behälter 7 des Montagesets 1. Hierzu wird der Sprühkopf 9 durch Aufdrücken betätigt und hydrophile Flüssigkeit 8 über die Austrittsöffnung 9 ausgesprüht. Vorteilhaft wird die hydrophile Flüssigkeit 8 auf die gesamte Oberfläche der höhenprofilierten Schicht des aeroben Klebstoffs 3 aufgetragen, wobei diese im Wesentlichen homogen verteilt ist.

Die hydrophile Flüssigkeit 8 muss nicht aktiv in einem separaten Arbeitsschritt mit dem aeroben Klebstoff 3 vermischt werden. Vielmehr kann sofort das Fügeteil 10 direkt auf die Schichtstruktur, bestehend aus der höhenprofilierten Schicht des aeroben Klebstoffs 3 und der darauf angeordneten Oberflächenschicht aus hydrophiler Flüssigkeit 8, aufgesetzt werden. Figur 5 zeigt die Situation, wenn das Fügeteil 10 gerade in Kontakt mit der Schichtstruktur kommt. Durch den vom Fügeteil 10 ausgeübten Druck werden die Spitzen der höhenprofilierten Schicht in Richtung der Täler hineingedrückt. Dadurch entsteht eine mäanderförmige Struktur, wobei die Oberflächenschicht aus der hydrophilen Flüssigkeit 8 auf der Oberfläche der Schicht aus aerobem Klebstoff 3 mehrfach umgefaltet wird. Dadurch entsteht ohne weitere Hilfsmittel allein durch Aufsetzen des Fügeteils 10 eine volumenmäßige Untermischung der hydrophilen Flüssigkeit 8 in dem aeroben Klebstoff 3, das heißt die hydrophile Flüssigkeit 8 wird im gesamten Volumen des aeroben Klebstoffs 3 verteilt eingelagert und so mit diesem durchmischt.

Figur 6 zeigt die Situation, nachdem das Fügeteil 10 vollständig gegen die Unterlage 11 angepresst wurde. Durch den Anpressvorgang ist zwischen Fügeteil 10 und Unterlage 11 eine Schicht mit aeroben Klebstoff 3 entstanden, der im gesamten Volumen mit hydrophiler Flüssigkeit 8 durchsetzt ist. Dadurch kann diese Schicht schnell in ihrem gesamten Volumen zum Befestigungsmittel 2 durch reagieren und aushärten, wodurch das Fügeteil 10 fest mit der Unterlage 11 verbunden ist.

### Bezugszeichenliste

- (1): Montageset
- (2): Befestigungsmittel
- (3): aerob er Klebstoff
- (4): Tube
- (5): Zahnspachtel
- (5a): Zahnung
- (6): Entnahmeöffnung
- (7): Behälter
- (8): hydrophile Flüssigkeit
- (9): Sprühkopf
- (9a): Austrittsöffnung
- (10): Fügeteil
- (11): Unterlage

## Patentansprüche

1. Befestigungsmittel (2) zur Fixierung eines Gegenstands auf einer Unterlage (11), bestehend aus einem aeroben Klebstoff (3) und einem fließfähigen Stoff, wobei der aerobe Klebstoff (3) in einer ersten Aufnahme mit einem zugeordneten von einem Zahnspachtel (5) gebildeten ersten Entnahmemittel gelagert ist, und der fließfähige Stoff in einer zweiten, von der ersten Aufnahme getrennten Aufnahme mit einem zugeordneten zweiten Entnahmemittel gelagert ist, wobei das erste Entnahmemittel so ausgebildet ist, dass mit diesem auf der Unterlage (11) eine höhenprofilierte Schicht von aerobem Klebstoff (3) generiert wird, und wobei das zweite Entnahmemittel so ausgebildet ist, dass auf der höhenprofilierten Schicht von aerobem Klebstoff (3) eine vom fließfähigen Stoff gebildete Oberflächenschicht gebildet wird, und wobei durch Aufpressen des Gegenstands auf die so gebildete Schichtstruktur Volumeneinlagerungen des fließfähigen Stoffs in dem aeroben Klebstoff (3) gebildet werden.

2. Befestigungsmittel nach Anspruch 1, **dadurch gekennzeichnet, dass** das erste Entnahmemittel mit der ersten Aufnahme eine Baueinheit bildet.

3. Befestigungsmittel nach einem der Ansprüche 1 oder 2, **dadurch gekennzeichnet, dass** der aerobe Klebstoff (3) von Polymeren gebildet ist.

4. Befestigungsmittel nach Anspruch 3, **dadurch gekennzeichnet, dass** der aerobe Klebstoff von silanen MS-Polymeren gebildet ist.

5. Befestigungsmittel nach einem der Ansprüche 1 bis 4, **dadurch gekennzeichnet, dass** der fließfähige Stoff aus einem hydrophilen oder hygroskopischen Stoff besteht.

6. Befestigungsmittel nach einem der Ansprüche 1 bis 5, **dadurch gekennzeichnet, dass** der fließfähige Stoff eine Flüssigkeit ist.

7. Befestigungsmittel nach Anspruch 6, **dadurch gekennzeichnet, dass** der fließfähige Stoff Polyethylen-Glykol, Polypropylen-Glykol, eine Sauerstofflösung oder ein Alkohol ist.

8. Befestigungsmittel nach Anspruch 6, **dadurch gekennzeichnet, dass** der fließfähige Stoff Wasser ist.

9. Befestigungsmittel nach einem der Ansprüche 7 oder 8, **dadurch gekennzeichnet, dass** der als Flüssigkeit ausgebildete fließfähige Stoff in einem das zweite Entnahmemittel bildenden Sprühkopf (9) gelagert ist.

10. Befestigungsmittel nach einem der Ansprüche 1 bis 9, **dadurch gekennzeichnet, dass** das zweite Entnahmemittel mit der zweiten Aufnahme eine Baueinheit bildet.

11. Befestigungsmittel nach einem der Ansprüche 1 bis 10, **dadurch gekennzeichnet, dass** die erste Aufnahme mit dem ersten Entnahmemittel zusammen mit der zweiten Aufnahme und dem zweiten Entnahmemittel eine Baueinheit bilden.

12. Verfahren zur Fixierung eines Gegenstands auf einer Unterlage (11) mittels eines Befestigungsmittels (2), bestehend aus einem aeroben Klebstoff (3) und einem fließfähigen Stoff, wobei der aerobe Klebstoff (3) in einer ersten Aufnahme mit einem zugeordneten von einem Zahnspachtel (5) gebildeten ersten Entnahmemittel gelagert ist, wobei mit dem ersten Entnahmemittel auf der Unterlage (11) eine höhenprofilierte Schicht von aerobem Klebstoff (3) generiert wird, und wobei mit dem zweiten Entnahmemittel auf der höhenprofilierten Schicht von aerobem Klebstoff (3) eine vom fließfähigen Stoff gebildete Oberflächenschicht gebildet wird, und wobei durch Aufpressen des Gegenstands auf die so gebildete Schichtstruktur Volumeneinlagerungen des fließfähigen Stoffs in dem aeroben Klebstoff (3) gebildet werden.

## Claims

1. Fastening means (2) for fixing an article to a support (11), consisting of an aerobic adhesive (3) and a flowable substance, wherein the aerobic adhesive (3) is stored in a first receptacle with associated first removal means formed by a toothed spatula (5) and the flowable substance is stored in a second receptacle, which is separate from the first receptacle, with associated second removal means, wherein the first removal means is so constructed that a highly profiled layer of aerobic adhesive (3) is generated on the support (11) by the first removal means and wherein the second removal means is so constructed that a surface layer formed by the flowable substance is formed on the highly profiled layer of aerobic adhesive (3), and wherein by pressing the article onto the thus-formed layer structure volume inclusions of the flowable substance are formed in the aerobic adhesive (3).

2. Fastening means according to claim 1, **characterised in that** the first removal means forms a constructional unit with the first receptacle.

3. Fastening means according to one of claims 1 and 2, **characterised in that** the aerobic adhesive (3) is formed by polymers.

4. Fastening means according to claim 3, **characterised in that** the aerobic adhesive is formed by silane MS polymers.

5. Fastening means according to any one of claims 1 to 4, **characterised in that** the flowable substance consists of a hydrophilic or hygroscopic substance.

6. Fastening means according to any one of claims 1 to 5, **characterised in that** the flowable substance is a liquid.

7. Fastening means according to claim 6, **characterised in that** the flowable substance is polyethylene glycol, polypropylene glycol, an oxygen solution or an alcohol.

8. Fastening means according to claim 6, **characterised in that** the flowable substance is water.

9. Fastening means according to one of claims 7 and 8, **characterised in that** the flowable substance formed as liquid is stored in a spray head (9) forming the second removal means.

10. Fastening means according to any one of claims 1 to 9, **characterised in that** the second removal means forms a constructional unit together with the second receptacle.

11. Fastening means according to any one of claims 1 to 10, **characterised in that** the first receptacle with the first removing means together with the second receptacle and the second removal means form a constructional unit.

12. Method for fixing an article on a support (11) by way of fastening means (2) consisting of an aerobic adhesive (3) and a flowable substance, wherein the aerobic adhesive (3) is stored in a first receptacle with associated first removal means formed by a toothed spatula (5), wherein a highly profiled layer of aerobic adhesive (3) is generated on the support (11) by the first removal means and wherein a surface layer formed by the flowable substance is formed on the highly profiled layer of aerobic adhesive (3) by the second removal means and wherein by pressing the article onto the thus-formed layer structure volume inclusions of the flowable substance are formed in the aerobic adhesive (3).

## Revendications

1. Moyen de fixation (2) affecté au blocage à demeure d'un objet sur une structure sous-jacente (11), composé d'un adhésif aérobie (3) et d'une substance fluide, ledit adhésif aérobie (3) étant stocké dans un premier logement équipé d'un premier moyen de prélèvement associé, constitué d'une spatule crantée (5), et ladite substance fluide étant stockée dans un second logement séparé d'avec ledit premier logement et équipé d'un second moyen de prélèvement associé, ledit premier moyen de prélèvement étant réalisé de manière qu'il engendre, sur la structure sous-jacente (11), une couche d'adhésif aérobie (3) à profilage en hauteur, et ledit second moyen de prélèvement étant réalisé de manière à former, sur ladite couche d'adhésif aérobie (3) à profilage en hauteur, une couche superficielle constituée par ladite substance fluide, sachant qu'un pressage de l'objet, sur la structure stratifiée ainsi formée, crée des inclusions de ladite substance fluide dans le volume dudit adhésif aérobie (3).

2. Moyen de fixation selon la revendication 1, **caractérisé par le fait que** le premier moyen de prélèvement forme un ensemble structurel unitaire avec le premier logement.

3. Moyen de fixation selon l'une des revendications 1 ou 2, **caractérisé par le fait que** l'adhésif aérobie (3) consiste en des polymères.

4. Moyen de fixation selon la revendication 3, **caractérisé par le fait que** l'adhésif aérobie consiste en des polymères modifiés silane.

5. Moyen de fixation selon l'une des revendications 1 à 4, **caractérisé par le fait que** la substance fluide est constituée d'une substance hydrophile ou hygroscopique.

6. Moyen de fixation selon l'une des revendications 1 à 5, **caractérisé par le fait que** la substance fluide est un liquide.

7. Moyen de fixation selon la revendication 6, **caractérisé par le fait que** la substance fluide est du polyéthylène glycol, du polypropylène glycol, une solution d'oxygène ou un alcool.

8. Moyen de fixation selon la revendication 6, **caractérisé par le fait que** la substance fluide est de l'eau.

9. Moyen de fixation selon l'une des revendications 7 ou 8, **caractérisé par le fait que** la substance fluide, se présentant comme un liquide, est stockée dans une tête de pulvérisation (9) formant le second moyen de prélèvement.

10. Moyen de fixation selon l'une des revendications 1 à 9, **caractérisé par le fait que** le second moyen de prélèvement forme un ensemble structurel unitaire avec le second logement.

11. Moyen de fixation selon l'une des revendications 1 à 10, **caractérisé par le fait que** le premier logement et le premier moyen de prélèvement forment un ensemble structurel unitaire en association avec le second logement et le second moyen de prélèvement.

12. Procédé de blocage à demeure d'un objet sur une structure sous-jacente (11), à l'aide d'un moyen de fixation (2) composé d'un adhésif aérobie (3) et d'une substance fluide, ledit adhésif aérobie (3) étant stocké dans un premier logement équipé d'un premier moyen de prélèvement associé, constitué d'une spatule crantée (5), sachant qu'une couche d'adhésif aérobie (3), à profilage en hauteur, est engendrée sur la structure sous-jacente (11) par ledit premier moyen de prélèvement, sachant qu'une couche superficielle constituée par ladite substance fluide est formée, par ledit second moyen de prélèvement, sur ladite couche d'adhésif aérobie (3) à profilage en hauteur, et sachant qu'un pressage de l'objet, sur la structure stratifiée ainsi formée, crée des inclusions de ladite substance fluide dans le volume dudit adhésif aérobie (3).
